# EUROPEAN PATENT SPECIFICATION

(11) **EP 2 226 356 B1**
(45) Date of publication and mention of the grant of the patent: **09.01.2013**
(21) Application number: 08800940.2
(22) Date of filing: 22.09.2008
(51) Int. Cl.: C08L 29/04, C08L 71/02, A63B 37/00, A63B 45/00, B29C 47/00, B29C 49/06, B29D 22/00, B29B 11/14, C08K 3/00, C08K 5/00, C08L 1/02

(54) **A GOLF BALL-FORMING COMPOSITION, GOLF BALLS PREPARED FROM THE COMPOSITION AND THE PROCESS FOR PREPARING THEREOF**
GOLFBALLBILDENDE ZUSAMMENSETZUNG, AUS DER ZUSAMMENSETZUNG HERGESTELLTE GOLFBÄLLE UND HERSTELLUNGSVERFAHREN DAFÜR
COMPOSITION PERMETTANT L'ÉLABORATION D'UNE BALLE DE GOLF, BALLES DE GOLF ÉLABORÉES À PARTIR DE CETTE COMPOSITION ET PROCÉDÉ D'ÉLABORATION DE CETTE BALLE DE GOLF

(30) Priority: 30.09.2007 CN 200710175551
(43) Date of publication of application: 08.09.2010
(73) Proprietor: Proudly Eco-Friendly Products Co., Limited, Hong Kong (CN)
(72) Inventor: MO, Xiongxun, Guangdong 510620 (CN)
(74) Representative: Cross, Rupert Edward Blount
(86) International application number: PCT/CN2008/072446
(87) International publication number: WO 2009/046657

(56) References cited:
- WO-A1-00/57961
- CN-A- 1 393 273
- CN-A- 1 935 883
- CN-A- 1 935 886
- GB-A- 1 174 139
- JP-A- 63 111 040
- US-A- 5 150 906
- US-A1- 2005 227 789
- US-A1- 2006 205 534
- US-A1- 2007 015 605
- DATABASE WPI Week 200363 Thomson Scientific, London, GB; AN 2003-666029 XP002612460, -& JP 2002 371201 A (MITSUI CHEM INC) 26 December 2002 (2002-12-26)
- DATABASE WPI Week 198825 Thomson Scientific, London, GB; AN 1988-172407 XP002612441, & JP 63 111040 A (NIPPON OIL KK) 16 May 1988 (1988-05-16)

## Description

### BACKGROUND OF THE INVENTION

The present invention relates to a golf ball-forming composition, golf balls prepared from the composition and the process for preparing thereof.

Golf is a popular sport well-received by sports lovers around the world. Generally, a golf course is built on land, but water golf is increasingly popular nowadays. Water golf is usually played on yachts, sea shores, rafts, beaches or watersides where players hit the golf balls into the water to experience the joy and excitement of swinging their golf clubs in water environment. Since the golf balls of this kind of water golf are hit directly into the water, it is hard to collect back the balls falling into the water. Common golf balls made of traditional materials which are not water-soluble and not naturally degradable (such as rubber and synthetic resin) are not water-soluble, and causes white pollution in oceans, rivers, lakes and so forth when they are hit into the water. Furthermore, since these common golf balls are not completely degradable in natural environment, they are also harmful to oceans, rivers, lakes and other natural environments as well as the lives therein. Therefore, common golf balls are not suitable for this kind of water golf.

Japanese patent application JP 2002 371 201 A relates to a biodegradable resin composition containing 25-80 weight % biodegradable resin, 75-20 weight % of inorganic filler and 3-100 weight parts of water soluble resin to 100 weight parts biodegradable resin. The water soluble resin may be polyvinyl alcohol.

U.S. Patent No. 5098104 discloses a water-soluble golf ball comprised of an outer skin and an inner core. The outer skin is prepared by compression molding or static casting of a mixture formed by first grinding paper pulp, sawdust, lint, straw, thread, twine, leaves and so forth and then adding thereto a set proportion of water-soluble polymer (e.g. gelatin, agar, processed seaweed, non-toxic white glue and so forth). The inner core is prepared by using a die to heat and compress a mixture formed by first blending sodium bicarbonate, sodium citrate, sodium chloride, diatomaceous earth or other water-soluble materials to form a slurry and then adding thereto a set proportion of water-soluble polymer. The outer skin and the inner core obtained are then formed into one complete golf ball using a jig or other methods. The patent also discloses that materials such as low carbon steel buck shot or fine steel filings can be added into the inner core. The golf ball disclosed in the patent has a double-layer structure combined by water-soluble adhesive; it can be easily cracked and smashed when it is in use, and its production method and its structure are also relatively complicated.

U.S. Patent No. 5356149 discloses a water-soluble golf ball prepared by injection molding of a mixture comprising environmentally safe thermo-setting adhesives or fillers and water-soluble thermo-setting adhesive. The patent is an improvement made by the patentee of the aforementioned patent over the previous patent of his own, the water-soluble fillers used therein is paper pulp, sawdust, lint, straw, thread, twine, leaves and so forth whereas the water-soluble adhesives is polymers, gelatin, glucose, fructose, animal glue, glycerol, agar, guargum, other similar water-soluble thermo-setting adhesives and so forth. According to the patent, the water-soluble fillers are first grounded and then added with water-soluble thermo-setting adhesives; the fillers and the adhesives are then combined by heat and compression and after that, the resultant slurry mixture are injected into a die to form a solid water-soluble golf ball.

Water solubility, especially the solubility in cold water, of the water-soluble adhesives selected for preparing the golf balls disclosed in the aforementioned two patents is poor in that the components thereof are deficient in quick water solubility although they have good degradability. Furthermore, as the golf balls are solid in structure, they are dissolved relatively slow in water and relatively long time is required for them to dissolve. On the other hand, since the golf balls disclosed in the aforementioned two patents are both restricted by the characteristics of their raw materials, their production methods mix the fillers and the adhesives to form a slurry mixture and then cast or inject the slurry mixture into a die to solidify and form a solid water-soluble golf ball. However, such production is inefficient and inconvenient for large scale industrial production.

### BRIEF SUMMARY OF THE INVENTION

The first technical problem to be shoveled by the present invention is to provide a golf ball-forming composition that has very good water solubility; the second technical problem to be solved by the present invention is to provide a water-soluble and biodegradable golf ball prepared from the golf ball-forming composition; and the third technical problem to be solved by the present invention is to provide a method for preparing the water-soluble and biodegradable golf ball.

The first technical problem to be solved by the present invention is attained by providing a golf ball-forming composition which comprises:

| | |
|---|---|
| polyvinyl alcohol resin | 15-50 wt% |
| filler | 30-75 wt% |
| natural polymer material | 0-30 wt% |
| plasticizer | 5-40 wt% |

The natural polymer material is fibrous substance or polysaccharide based substance. The formulation of the golf ball-forming composition selects materials having good water solubility, so the golf ball-forming composition has good water solubility.

In the golf ball-forming composition, the filler is any one or a mixture of a plurality of the following: polyethylene wax, silica, talc, kaolin, clay, bentonite, mica powder, zinc sulfide, barium carbonate, calcium sulfate, barium sulfate, calcium carbonate, magnesium carbonate, magnesium hydroxide, microcrystalline kaolinite, sodium sulfate, potassium sulfate, zinc sulfate, magnesium sulfate, sodium nitrate, potassium nitrate, aluminum nitrate, ammonium chloride, sodium chloride, potassium chloride, magnesium chloride, calcium chloride, calcium stearate, titanium dioxide, lithopone, stearamide or stearic acid; the natural polymer material is any one or a mixture of a plurality of the following: cellulose, lignin, starch, chitin, chitosan or modified polysaccharides (e.g. amorphophallus konjac); and the plasticizer is any one or a mixture of a plurality of the following: glycerol, diglycerol, polyethylene glycol, polypropylene glycol, trimethylolpropane, water or sorbitol. The polyvinyl alcohol resin is any one or a mixture of a plurality of substance(s) selected from polyvinyl alcohol resin raw materials with alcoholysis degree from of substance(s) selected from polyvinyl alcohol resin raw materials with alcoholysis 80mol% to 89mol% and polymerization degree from 300 to 3000.

The second technical problem to be solved by the present invention is attained by providing a golf ball prepared from the golf ball-forming composition, wherein the golf ball is a ball having a hollow inside, and the surface of the ball is disposed with at least one through hole communicating with the hollow. The golf ball of the present invention is different from the water-soluble golf balls mentioned earlier in that the component of the golf ball-forming composition of the golf ball of the present invention is polyvinyl alcohol resin (PVA resin) which has good water solubility and biodegradability, so that the ball has good water solubility. The mixing ratio of the golf ball-forming composition can also be adjusted according to the required strength, hardness, weight and so forth of the golf ball. The selection and content of the filler and additives can be determined by an integrated consideration of the production costs and the ensured performance of the golf ball. That is, addition of the filler can lower the production costs of the golf ball of the present invention and can also adjust the strength, hardness and weight of the golf ball. If the content of the filler is too high, production of the golf ball will be more difficult, and the speed of the golf ball to dissolve in water will also decrease. Addition of the natural polymer material can not only reduce the production costs of the golf ball as a filler, but also increase the speed of the golf ball to be naturally biodegraded. If the content of the natural polymer material is too high, preparation of the golf ball will be more difficult, the strength and hardness of the golf ball will decrease and the ball will be easily cracked and smashed. If the content of the plasticizer is too high, the plasticizer is likely to exude gradually onto the surface of the golf ball as time lapses. The golf ball of the present invention can be the same as a common golf ball in outer appearance with dimples formed over its surface. While the performance of the golf ball of the present invention is maintained as best as possible to be substantially the same as a common golf ball during actual use, better water solubility of the ball can be attained by the provision of the through hole on the surface of the ball, so that water can enter the hollow of the ball, thereby increasing the contact area between water and the ball; as a result, both the inside and the outside of the ball can be dissolved, thereby increasing the dissolving speed of the ball.

Furthermore, the ball is 40-60g in weight and 43-46mm in diameter. The size of the hollow inside the ball may vary but the minimum wall thickness of the ball should not be less than 3mm. Also, the surface of the ball is disposed with at least one through hole communicating with the hollow. The diameter of the through hole may be 1-4mm. With a view to facilitate quick water solubility, the number of through holes can be more than 1 (e.g. more than 1 through holes arranged symmetrically).

The golf ball of the present invention is integrally formed with relatively high strength and hardness, so that the ball will not be smashed easily when it is hit. The major component of the golf ball is water-soluble polyvinyl alcohol, which has good water solubility and is completely biodegradable in natural environment and therefore will not cause white pollution in oceans, rivers and lakes and will not harm the natural environment. Besides, the materials used in the golf ball of the present invention are non-toxic and non-pollutive and therefore will not harm the lives and plants in oceans, rivers and lakes as well. In particular, the ball may have a hollow structure so that water can enter the ballvia the through hole disposed on the surface of the ball when the golf ball is hit into water; as a result, the contact area between water and the golf ball will increase and dissolution of the golf ball in water will thereby be accelerated.

The third technical problem to be solved by the present invention is attained by providing a process for preparing a golf ball which comprises mixing the raw materials firstly and then extruding and blow molding the mixture, the steps of which are as follows:
step 1: blending the raw materials under stirring to obtain a mixture;
step 2: kneading the mixture obtained in the step 1 to obtain a kneaded material;
step 3: extrusion molding the mixture obtained in the step 1 or the kneaded material obtained in the step 2 with an extruder to obtain a parison; and
step 4: blow molding the parison obtained in the step 3 to form a ball with a hollow.

The preparation process is simple, the production costs are low, and it complies with requirements of environmental protection. The process for preparing the golf ball of the present invention is simple and practical and it is suitable for large scale industrial production.

Further, in the step 1, the blending temperature is controlled to be 100°C or lower, the blending time is 15-90 minutes. In the step 2, the kneading temperature is controlled to be 100°C or lower, the kneading time is 10-90 minutes. In the step 3, the mixture or the kneaded material is extruded with a single screw extruder or a twin-screw extruder and the extrudant is formed by a pipe mold into a hollow tubular parison. In the step 4, the hollow tubular parison is blow molded to form a ball with a hollow inside. The temperature intervals from the inlet of the extruder to the mold at the outlet are controlled to be 50-100°C, 90-150°C, 90-180°C, 90-180°C, 90-180°C and 50-150°C in this order.

According to the process for preparing the golf ball of the present invention, it is also possible to prepare a solid water-soluble and biodegradable golf ball by well known injection molding of the mixture obtained in the step 1 or the kneaded material obtained in the step 2.

In summary of the above, the present invention provides a golf ball-forming composition with good water solubility. The golf balls prepared from the golf ball-forming composition has the following characteristics: 1) the ball can be dissolved in water more quickly, and there is no insoluble impurities which harm the environment, therefore it would not cause white pollution in oceans, rivers and lakes; 2) the ball can be completely degraded in the natural environment eventually and therefore would not harm the environment such as oceans, rivers and lakes; 3) all components are non-toxic and non-pollutive and therefore would not harm the lives in oceans, rivers and lakes; 4) the ball is suitable for golf sport in terms of strength, hardness and elasticity; 5) the ball may have a hollow structure with a through hole disposed on its surface and communicating with the hollow inside the ball, thereby accelerating the dissolving and degrading speed of the ball; and 6) the process for preparing the golf ball of the present invention is simple and practical and is suitable for large scale industrial production.

### BRIEF DESCRIPTION OF THE DRAWINGS

Fig. 1 illustratively shows the outer appearance of the solid golf ball of the present invention.

Fig. 2 illustratively shows the outer appearance of the hollow golf ball of the present invention, the surface of which is disposed with a through hole 1 b.

Fig. 3 is an illustrative cross-sectional view of the golf ball shown in Fig. 2 along line A-A.

In the drawings, the reference characters are detailed as follows: 10: ball; 1a: hollow; 1b: through hole

### DETAILED DESCRIPTION OF THE INVENTION

The object of the present invention is to achieve good water solubility of the material by adjusting the mixing ratio of the golf ball-forming composition. Moreover, a golf ball prepared from the golf ball-forming composition material can attain better contact with water by means of the design of the through holes communicating with the hollow. The golf ball has good water solubility and is completely degradable in natural environment and so it does not pollute or harm any water environment. Furthermore, the performance of the golf ball is close to a common golf ball during actual use and it is particularly suitable for use in water golf, that is, played in golf courses on yachts, sea shores, lakesides, riversides and so forth. The present invention will be further described with reference to examples, but the examples should not be regarded as limiting. The selection and content of the materials in the formulation, and the temperature and time of the preparation process may vary according to different needs yet still produce no substantial impact on the end results.

The golf balls in the following examples are prepared according to the following steps:

Step 1: Adding polyvinyl alcohol resin, filler, natural polymer material and plasticizer in a set mixing ratio to a mixer to blend under stirring for 15 to 90 minutes at a controlled temperature of 100°C or lower to obtain a mixture.

Step 2: Adding the mixture obtained in the step 1 to a twin-roll kneader to knead for 10 to 90 minutes at a controlled temperature of 100°C or lower to obtain a kneaded material.

Step 3: Adding the mixture obtained in the step 1 or the kneaded material obtained in the step 2 to a single screw extruder or a twin-screw extruder for extrusion molding to form a cylindrical tubular parison via a pipe mold. The temperature intervals from the inlet to the mold at the outlet during the extrusion molding process are controlled to be 50-100°C, 90-150°C, 90-180°C, 90-180°C, 90-180°C and 50-150°C in this order.

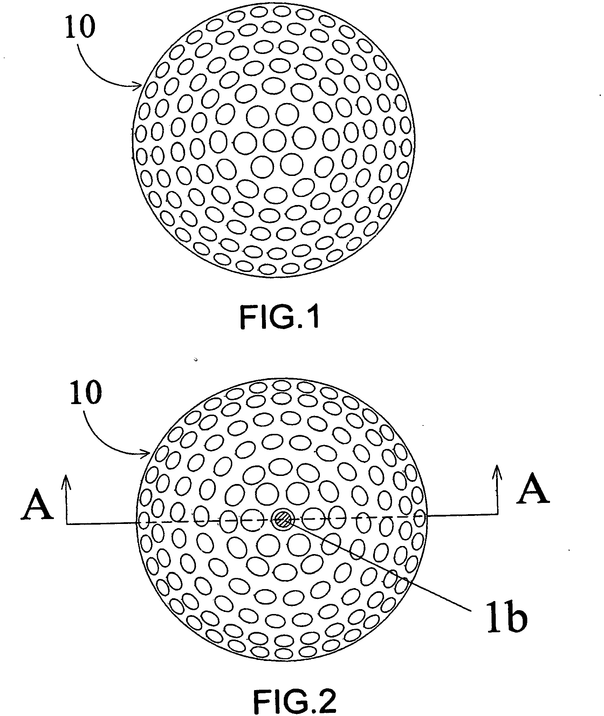

Step 4: The cylindrical tubular parison of a certain length obtained in the step 3 is fed to a golf ball mold to form a ball by blow molding. The golf ball prepared is formed with dimples all over its surface, just like a regular golf ball. The surface of the ball 10 is shown in FIG.2.

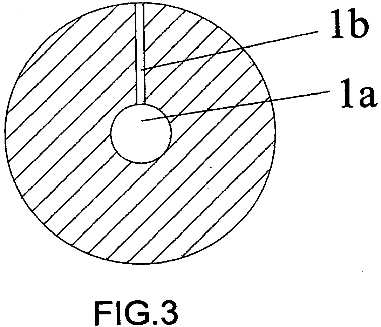

The ball prepared according to the steps above is shown in FIG.2 and FIG.3. The surface of the ball 10 can be the same as a common golf ball in outer appearance. Its diameter is d and its surface is disposed with at least one through hole 1 b. The ball has a hollow 1 a inside and the hollow 1 a communicates with the surface of the ball via the through hole 1b. When the ball 10 is hit into water, water gradually enters the hollow 1 a from the through hole 1b, thereby increasing the contact area between the water and the ball 10 and thus accelerating the dissolution of the ball 10. FIG.3 is an illustration of the golf ball provided by the present invention. During the preparation process thereof, the shape or position of the hollow may vary due to differences in the control of the preparation process. Hence, the present invention does not impose strict restriction on the shape and position of the hollow inside the ball. However, the minimum wall thickness of the ball should not be less than 3mm.

In the step 3, a solid spherical golf ball can be prepared by known injection molding methods with an injection molding machine using the mixture obtained in the step 1 or the kneaded material obtained in the step 2 mentioned above. The outer appearance of the ball 10 is shown in FIG.1.

The examples of the golf ball-forming composition are described below. The basic proposal of the golf ball-forming composition of the present invention is first described briefly as follows: a golf ball-forming composition having a weight composition of:

| | |
|---|---|
| polyvinyl alcohol resin | 15-50 wt% |
| filler | 30-75 wt% |
| natural polymer material | 0-30 wt% |
| plasticizer | 5-40 wt% |

The filler is common fillers known by the person skilled in the art; the natural polymer material is fibrous substance or polysaccharide based substance; and the plasticizer is common substances used by the person skilled in the art.

The polyvinyl alcohol resin used in the following examples includes GM-14 (alcoholysis degree from 86.5mol% to 89.0mol% and polymerization degree from 1500 to 2000), GL-05 (alcoholysis degree from 86.5mol% to 89.0mol% and polymerization degree from 300 to 700) and GH-20 (alcoholysis degree from 86.5mol% to 89.0mol% and polymerization degree from 2000 to 2500), all of which belongs to the GOHSENOL series manufactured by a Japanese company NIPPON GOHSEI; and JL-18E (alcoholysis degree from 83.0mol% to 86.0mol% and polymerization degree from 1500 to 2000) manufactured by a Japanese company JAPAN VAM & POVAL. The raw materials in all the following examples are measured in weight percentage (based on the total weight of the mixture for preparing the golf ball) and are used for preparing the water-soluble and biodegradable golf ball of the present invention according to the above preparation process. The specification of the golf ball of the present invention is substantially the same as that of a common golf ball, that is, 40-60g in total weight and 43-46mm in diameter d. If the ball 10 has a hollow structure as shown in FIG.3, the through hole 1 b which is disposed on the surface of the ball and communicating with the hollow is approximately 2mm in diameter.

Example 1

Raw materials and mixing ratio: PVA (GM-14) 18%, barium sulfate 45%, titanium dioxide 2%, glycerol 20% and water 15%.

Example 2

Raw materials and mixing ratio: PVA (JL-18E) 24%, starch 10%, magnesium hydroxide 30%, titanium dioxide 1%, barium sulfate 12%, sorbitol 2% and water 21%.

Example 3

Raw materials and mixing ratio: PVA (GM-14) 14%, PVA (GL-05) 9%, talc 55%, sorbitol 2% and water 20%.

Example 4 (comparative)

Raw materials and mixing ratio: PVA (GM-14) 30%, starch 45%, polyethylene glycol 3% and water 22%.

Example 5

Raw materials and mixing ratio: PVA (GH-20) 45%, barium sulfate 30%, polyethylene glycol 4% and water 21%.

Tests on water solubility of the golf ball

In an environment of a temperature of 30°C and a relative humidity of 65%, water-soluble and biodegradable golf balls of the present invention (with hollow structure) prepared by the above examples are placed into flowing water; select 3 of them randomly and observe their changes.

Test example 1

Specification of the ball: 44mm in diameter and 51g in weight.

Test records:

after 1 hour, the surface of the ball had a layer of white PVA slurry and appeared to be softened, indicating that the ball started to be dissolved; and water could also be seen entering the ball from the through hole;

after 2 hours, more fractures appeared on the outer layer of the ball; small flaky peel-offs started to appear on the outer layer of the ball; dissolution of the ball in the area around the through hole was obvious; and diameter of the through hole was also enlarged;

after 4 hours, the outer layer of the ball was seriously peeled off; and dissolution of the surface of the ball was obvious;

after 20 hours, a layer of fluffy floccule was formed on the outer layer of the ball; the dimple structure on the outer surface of the ball became unclear; softening of the outer layer of the ball became much more obvious; and larger fractures appeared on the surface of the ball;

after 40 hours, fractures on the surface of the ball continued to be widened; the outer layer of the ball was dissolved and peeled off; and cracks appeared at thin wall of the ball;

after 46 hours, a crack of 6cm long, 5mm wide and approximately 1cm deep ran from the through hole to the joint of the ball; larger flaky peel-offs appeared on the outer layer of the ball; and more water entered the hollow of the ball;

after 60 hours, a crack of approximately 4cm long and 2mm wide appeared at the inner side of the ball; and the crack on the surface of the ball was widened to 8mm;

after 72 hours, the crack at the through hole on the surface of the ball was further widened to 1.5cm; several cracks appeared in the area around the through hole; the front side of the ball communicated with the back side of the ball; and the ball was finally completely disintegrated.

Test example 2

Specification of the ball: 44mm in diameter and 45g in weight.

Test records:

after 1 hour, dimples on the surface of the ball were increasingly indistinct; a thin layer of fractures (resembling skin peel) appeared; dissolution of the ball started to take place and touch of the surface of the ball became softer;

after 15 hours, several fractures of approximately 2cm long appeared on the surface of the ball; the diameter of the through hole of the ball was widened and the ball was slowly deformed;

after 26 hours, two cracks each of approximately 10mm long appeared on the surface of the ball; as time lapsed, there were more and wider cracks on the ball and the ball was obviously deformed;

after 40 hours, small pieces of materials started to fall off from the ball; and breaking and cracking of the ball were increasingly serious;

after 50 hours, the ball was broken completely into two hemispheres; there were more and wider cracks all over other areas of the ball and there were gradually more small pieces of materials falling off from the ball;

after 72 hours, the ball was broken completely into about 12 small pieces of different sizes; the ball was close to complete disintegration; and the broken pieces were also gradually reduced in size.

Test example 3

Specification of the ball: 44mm in diameter and 45g in weight.

Test records:

after 1 hour, dimples on the surface of the ball were increasingly indistinct; a thin layer of fractures (resembling skin peel) appeared on the surface of the ball; and dissolution of the surface of the ball started to take place;

after 10 hours, two relatively shallow fractures appeared around the through hole of the ball;

after 24 hours, several fractures appeared on the surface of the ball; the diameter of the through hole of the ball was widened; the ball was deformed; more fractures gradually appeared on the surface of the ball and the fractures became longer and deeper;

after 40 hours, fractures appeared on many parts of the ball; fractures on the ball became longer and deeper; cracks were relatively wider in the area of the through hole and on its opposite side and they communicated with each other; the ball has already been seriously deformed;

after 45 hours, small pieces of materials started to fall off from the ball;

after 60 hours, breaking and cracking of the ball were increasingly serious;

after 72 hours, the ball was broken into two halves and there were relatively wide cracks all over other areas of the ball.

In conclusion, the golf ball according to the present invention has good water solubility and good natural biodegradability.

## Claims

1. A golf ball-forming composition which comprises:
| | |
|---|---|
| polyvinyl alcohol resin | 15-50 wt%; |
| filler | 30-75 wt%; |
| natural polymer material | 0-30 wt%; and |
| plasticizer | 5-40 wt%, |
based on a total weight of the composition
wherein the filler is any one or a mixture of a plurality of the following: polyethylene wax, silica, talc, kaolin, clay, bentonite, mica powder, zinc sulphide, barium carbonate, calcium sulfate, barium sulphate, calcium carbonate, magnesium carbonate, magnesium hydroxide, microcrystalline kaolinite, sodium sulphate, potassium sulphate, zinc sulphate, magnesium sulphate, sodium nitrate, potassium nitrate, aluminum nitrate, ammonium chloride, sodium chloride, potassium chloride, magnesium chloride, calcium chloride, calcium stearate, titanium dioxide, lithopone, stearamide or stearic acid;
the natural polymer material is fibrous substance or polysaccharide based substance;
the plasticizer is any one or a mixture of a plurality of the following: glycerol, diglycerol, polyethylene glycol, polypropylene glycol, trimethylolpropane, water or sorbitol, and
the polyvinyl alcohol resin is any one or a mixture of a plurality of substance(s) selected from polyvinyl alcohol resin raw materials with alcoholysis degree from 80mol% to 89mol% and polymerization degree from 300 to 3000.

2. A water soluble and biodegradable golf ball prepared from the golf ball-forming composition as claimed in claim 1, **characterised in that** the golf ball is a ball having a hollow inside, and the surface of the ball is disposed with at least one through hole communicating with the hollow.

3. The golf ball as claimed in claim 2, **characterised in that** the ball is 40-60g in weight and 43-46mm in diameter.

4. A process for preparing the water soluble and biodegradable golf ball as claimed in claim 2, which comprises mixing raw materials first and then extrusion molding and blow molding the mixture, the steps of which are as follows:
step 1: blending the raw materials under stirring to obtain a mixture;
step 2: kneading the mixture obtained in the step 1 to obtain a kneaded material;
step 3: extrusion molding the mixture obtained in the step 1 or the kneaded material obtained in the step 2 with a single screw extruder or a twin-screw extruder and the extrudant is formed by a pipe mold into a hollow tubular parison;
step 4: blow molding the hollow tubular parison obtained in the step 3 to form a ball with a hollow.

5. The preparation process as claimed in claim 4, **characterised in that** in the step 1, the blending temperature is controlled to be 100°C or lower, the blending time is 15-90 minutes.

6. The preparation process as claimed in claim 4, **characterised in that** in the step 2, the kneading temperature is controlled to be 100°C or lower, the kneading time is 10-90 minutes.

7. The preparation process as claimed in claim 4, **characterised in that** temperature intervals from the inlet of the extruder to the mold at the outlet are controlled to be 50-100°C,
90-150°C, 90-180°C, 90-180°C, 90-180°C and 50-150°C in this order.

## Patentansprüche

1. Golfballbildende Zusammensetzung welche umfasst:
| | |
|---|---|
| Polyvinylalkoholharz | 15-50 Gew.-%; |
| Füllstoff | 30-75 Gew.-%; |
| natürliches Polymermaterial | 0-30 Gew.-%; und |
| Weichmacher | 5-40 Gew.-%, |
basierend auf dem Gesamtgewicht der Zusammensetzung, wobei der Füllstoff irgendeines oder eine Mischung von einer Vielzahl der folgenden ist: Polyethylenwachs, Siliziumdioxid, Talk, Kaolin, Ton, Benzonit, Glimmerpulver, Zinksulfid, Bariumcarbonat, Kalziumsulfat, Bariumsulfat, Kalziumcarbonat, Magnesiumcarbonat, Magnesiumhydroxid, mikrokristallines Kaolinit, Natriumsulfat, Kaliumsulfat, Zinksulfat, Magnesiumsulfat, Natriumnitrat, Kaliumnitrat, Aluminiumnitrat, Ammoniumchlorid, Natriumchlorid, Kaliumchlorid, Magnesiumchlorid, Kalziumchlorid, Kalziumstearat, Titandioxid, Lithophon, Stearinsäureamid oder Stearinsäure;
das natürliche Polymermaterial eine fasrige Substanz oder eine Polysaccharid basierte Substanz ist;
der Weichmacher irgendeines oder eine Mischung aus einer Vielzahl von den folgenden ist: Glyzerin, Diglyzerin, Polyethylenglycol, Polypropylenglycol, Trimethylolpropan, Wasser oder Sorbitol, und
das Polyvinylalkoholharz irgendeines oder eine Mischung von einer Vielzahl von Substanz(en) ausgewählt von Polyvinylalkoholharz Rohmaterialien mit Alkohollysegrad von 80 mol% bis 89 mol% und mit Polymerisationsgrad von 300 bis 3000 ist.

2. Wasserlöslicher und biologisch abbaubarer Golfball, hergestellt aus der golfballbildenden Zusammensetzung nach Anspruch 1, **dadurch gekennzeichnet, dass** der Golfball eine Kugel ist, welche einen inneren Hohlraum aufweist und die Oberfläche der Kugel über mindestens ein Durchgangsloch verfügt, welches mit dem Hohlraum verbunden ist.

3. Golfball nach Anspruch 2, **dadurch gekennzeichnet, dass** die Kugel 40-60 g im Gewicht und 43-46 mm im Durchmesser aufweist.

4. Verfahren zur Herstellung des wasserlöslichen und biologisch abbaubaren Golfballs nach Anspruch 2, welches zuerst ein Mischen von Rohmaterialien und dann sein Extrusionsformen und ein Blasformen der Mischung umfasst, wobei die Schritte wie folgt sind:
Schritt 1: Vermischen der Rohmaterialien unter Rühren, um eine Mischung zu erhalten;
Schritt 2: Kneten der Mischung, welche in Schritt 1 erhalten wurde, um ein geknetetes Material zu erhalten;
Schritt 3: Extrusionsformen der Mischung, welche im Schritt 1 erhalten wurde oder des gekneteten Materials, welches in Schritt 2 erhalten wurde, mit einen Einschneckenextruder oder einem Zweischneckenextruder und wobei das Extrudant durch eine Rohrform in einem hohlen röhrenförmigen Vorformling gebildet wird;
Schritt 4: Blasformen des hohlen röhrenförmigen Vorformlings, welcher im Schritt 3 erhalten wurde, um eine Kugel mit einem Hohlraum zu bilden.

5. Herstellungsverfahren nach Anspruch 4, **dadurch gekennzeichnet, dass** in dem Schritt 1 die Mischtemperatur auf 100°C oder niedriger geregelt/gesteuert wird und die Mischzeit 15 bis 90 Minuten beträgt.

6. Herstellungsverfahren nach Anspruch 4, **dadurch gekennzeichnet, dass** in dem Schritt 2 die Knettemperatur auf 100°C oder niedriger geregelt/gesteuert wird und die Knetzeit 10 bis 90 Minuten beträgt.

7. Herstellungsverfahren nach Anspruch 4, **dadurch gekennzeichnet, dass** Temperaturintervalle von dem Einlass von dem Extruder zu der Form an dem Auslass geregelt/gesteuert werden, um 50-100 °C, 90-150 °C, 90-180 °C, 90-180 °C, 90-180 °C und 50-150 °C in dieser Reihenfolge zu sein.

## Revendications

1. Composition de formation de balle de golf, qui comprend :
| | |
|---|---|
| une résine d'alcool polyvinylique | 15-50 % en poids |
| une charge | 30-75 % en poids |
| une matière polymère naturelle | 0-30 % en poids et |
| un plastifiant | 5-40 % en poids; |
sur la base du poids total de la composition,
dans laquelle la charge est n'importe laquelle ou un mélange d'une pluralité des charges suivantes : une cire de polyéthylène, la silice, le talc, le Kaolin, une argile, la bentonite, la poudre de mica, le sulfure de zinc, le carbonate de baryum, le sulfate de calcium, le sulfate de baryum, le carbonate de calcium, le carbonate de magnésium, l'hydroxyde de magnésium, la kaolinite microcristalline, le sulfate de sodium, le sulfate de potassium, le sulfate de zinc, le sulfate de magnésium, le nitrate de sodium, le nitrate de potassium, le nitrate d'aluminium, le chlorure d'ammonium, le chlorure de sodium, le chlorure de potassium, le chlorure de magnésium, le chlorure de calcium, le stéarate de calcium, le dioxyde de titane, la lithopone, le stéaramide ou l'acide stéarique ;
la matière polymère naturelle est une substance fibreuse ou une substance à base de polysaccharide ;
le plastifiant est n'importe lequel ou un mélange d'une pluralité des plastifiants suivants : le glycérol, le diglycérol, le polyéthylèneglycol, le polypropylèneglycol, le triméthylolpropane, l'eau ou le sorbitol, et
la résine d'alcool polyvinylique est n'importe laquelle ou un mélange d'une pluralité de substances choisies parmi des matières premières de résines d'alcool polyvinylique ayant un degré d'alcoolyse de 80 % en moles à 89 % en moles et un degré de polymérisation de 300 à 3000.

2. Balle de golf hydrosoluble et biodégradable préparée à partir de la composition de formation de balle de golf suivant la revendication 1, ladite balle de golf étant **caractérisée en ce qu'**elle consiste en une balle dont l'intérieur est creux, et la surface de la balle est munie d'au moins un trou de passage communicant avec l'intérieur creux.

3. Balle de golf suivant la revendication 2, ladite balle de golf étant **caractérisée en ce qu'**elle a un poids de 40 à 60 g et un diamètre de 43 à 46 mm.

4. Procédé pour préparer la balle de golf hydrosoluble et biodégradable suivant la revendication 2, qui comprend tout d'abord le mélange de matières premières et ensuite le moulage par extrusion et le moulage par soufflage du mélange, dont les étapes sont les suivantes :
étape 1 : mélange des matières premières sous agitation pour obtenir un mélange ;
étape 2 : malaxage du mélange obtenu dans l'étape 1 pour obtenir une matière malaxée ;
étape 3 : moulage par extrusion du mélange obtenu dans l'étape 1 ou de la matière malaxée obtenue dans l'étape 2 au moyen d'une extrudeuse à une vis ou d'une extrudeuse à deux vis, l'extrudat étant mis sous forme, au moyen d'un moule en forme de conduit, en une paraison tubulaire creuse ;
étape 4 : moulage par soufflage de la paraison tubulaire creuse obtenue dans l'étape 3 pour former une balle dont l'intérieur est creux.

5. Procédé de préparation suivant la revendication 4, **caractérisé en ce que**, dans l'étape 1, la température de mélange est ajustée à 100°C ou moins et le temps de mélange va de 15 à 90 minutes.

6. Procédé de préparation suivant la revendication 4, **caractérisé en ce que**, dans l'étape 2, la température de malaxage est ajustée à 100°C ou moins et le temps de malaxage va de 10 à 90 minutes.

7. Procédé de préparation suivant la revendication 4, **caractérisé en ce que** les intervalles de température de l'orifice d'admission de l'extrudeuse au moule à l'orifice de sortie sont ajustés de manière à être de 50-100°C, 90-150°C, 90-180°C, 90-180°C, 90-180°C et 50-150°C dans cet ordre.
